# EUROPÄISCHE PATENTSCHRIFT

(11) **EP 3 081 361 B1**
(45) Veröffentlichungstag und Bekanntmachung des Hinweises auf die Patenterteilung: **18.10.2017**
(21) Anmeldenummer: 16164667.4
(22) Anmeldetag: 28.10.2013
(51) Int. Cl.: B29C 45/73

(54) **VORRICHTUNG ZUR VARIOTHERMEN TEMPERIERUNG EINES SPRITZGIESSWERKZEUGES**
DEVICE FOR THE VARIOTHERMAL TEMPERING OF AN INJECTION MOLDING TOOL
DISPOSITIF DESTINE A LA REGULATION DE TEMPERATURE VARIOTHERMIQUE D'UN OUTIL DE MOULAGE PAR INJECTION

(30) Priorität: 02.12.2012 DE 102012111700
(43) Veröffentlichungstag der Anmeldung: 19.10.2016
(62) Teilanmeldung aus: 13190485.6
(73) Patentinhaber: Wenz Kunststoff GmbH & Co. KG, 58511 Lüdenscheid (DE)
(72) Erfinder: Weller, Karsten, 58509 Lüdenscheid (DE)
(74) Vertreter: Patentanwälte Dörner & Kötter PartG mbB

(56) Entgegenhaltungen:
- DE-A1-102008 045 006
- JP-A- 2012 045 872
- JP-A- 2012 081 595

## Beschreibung

Die Erfindung betrifft eine Vorrichtung zur variothermen Temperierung eines Spritzgießwerkzeugs nach dem Oberbegriff des Patentanspruchs 1. Vorrichtungen zur variothermen Temperierung sind aus der JP 2012 045872 A, der JP 2012 081595 A und der DE 10 2008 045006 A1 bekannt.

Bei der variothermen Temperierung wird die Werkzeugwand des Spritzgießwerkzeugs vor dem Einspritzvorgang auf eine Temperatur oberhalb der Glasübergangstemperatur des Kunststoffs erwärmt. Erst nach der Füllung der Kavität erfolgt eine Werkzeugkühlung, bis das Formteil die notwendige Entformungstemperatur erreicht hat. Hierzu werden in dem Spritzgießwerkzeug integrierte Kühlkanäle wechselweise warm und kalt durchströmt. Das Aufheizen der Werkzeugwand auf ein hohes Temperaturniveau erfolgt durch ein drucküberlagertes Heißwassertemperiergerät mit Vorlauftemperaturen von bis zu 180° Celsius und mehr. Das heiße Wasser wird bei Drücken von bis zu 8 bar durch die Kanäle des Spritzgießwerkzeugs gepumpt, bis die gewünschte Werkzeugtemperatur erzielt ist. Nach dem Einspritzen des Kunststoffs in die Kavität des Spritzgießwerkzeugs erfolgt das Abkühlen der Werkzeugwand über ein zweites Temperiergerät mit niedriger Vorlauftemperatur. Bei der Kombination der beiden Kreisläufe (Heizen/ Kühlen) ist es unbedingt erforderlich, den Wasserdruck über den gesamten Prozess konstant zu halten, um eine Expansion des Kühlmediums zu vermeiden. Nachteilig an der vorbekannten Vorrichtung ist, dass diese durch den Einsatz von zwei Temperiergeräten sehr aufwendig ist. Die Kühlung des Kühlmediums erfolgt hier über einen Wärmetauscher, der die Abwärme über ein weiteres Kühlmedium abführt, das nicht Bestandteil des Kühlkreislaufs ist. Darüber hinaus ist die Zykluszeit des Werkzeugs mit einer solchen Vorrichtung nach wie vor sehr hoch.

Hier will die Erfindung Abhilfe schaffen. Der Erfindung liegt die Aufgabe zu Grunde, eine Vorrichtung zur variothermen Temperierung eines Spritzgießwerkzeugs zu schaffen, welche aufwandminimiert herstellbar ist und bei der die Zykluszeit des Werkzeugs vermindert ist. Gemäß der Erfindung wird diese Aufgabe durch die Merkmale des kennzeichnenden Teils des Patentanspruchs 1 gelöst.

Mit der Erfindung ist eine Vorrichtung zur variothermen Temperierung eines Spritzgießwerkzeugs geschaffen, welche aufwandminimiert herstellbar ist und bei der die Zykluszeit des Werkzeugs vermindert ist. Durch die unmittelbare Kopplung des Kühlkreislaufs mit dem Wassernetz ist lediglich ein Temperiergerät erforderlich. Erfindungswesentlich ist, dass das Wasser des Wassernetzes direkt als Kühlmedium in den Kühlkreislauf eingespeist wird (Direktkühlung). Der im Stand der Technik regelmäßig eingesetzte Wärmetauscher zur Kühlung des Kühlmediums innerhalb des Kühlkreislaufs entfällt. Durch die im Zulauf angeordnete Druckpumpe in Kombination mit dem im Rücklauf angeordneten Überstrom- oder Drosselventil ist die Realisierung eines konstanten Wasserdrucks innerhalb des mit dem Heizkreislauf gekoppelten Kühlkreislaufs ermöglicht. Dabei ermöglicht die hohe Temperaturdifferenz der beiden Kreisläufe signifikant reduzierte Zykluszeiten. Durch die Verbindung von Kühlkreislauf und Heizkreislauf über ein Mehrwegestück, insbesondere ein T-Stück oder Y-Stück ist ein äußerst geringer Wasseraustausch (Wasserwechsel) zwischen Heiz- und Kühlkreislauf bewirkt. Das Mehrwegestück kann dabei direkt an Vor- bzw. Rücklauf des Werkzeugs angeordnet sein. Hierdurch sind schnelle Reaktionszeiten auch bei entfernt angeordneter Ventilanordnung vom Werkzeug erzielbar.

Der Rücklauf des Kühlkreislaufs ist über eine ein Absperrventil aufweisende Kopplung mit dem Rücklauf des Heizkreislaufs verbunden, in der ein Wärmetauscher angeordnet ist. Hierdurch kann die während der Kühlphase von dem aufgeheizten Werkzeug an das Kühlwasser abgegebene Energie dem Heizkreislauf wiederzugeführt werden, wodurch der Heizprozess weiter verkürzt ist. Zudem ist hierdurch eine Energieeinsparung erzielt.

In Weiterbildung der Erfindung ist im Rücklauf des Heizkreislaufs ein Wärmekondensator angeordnet. Unter dem Begriff "Wärmekondensator" wird vorliegend eine Vorrichtung verstanden, die - entsprechend einem Wärmepufferspeicher - eingerichtet ist, Wärme eines durchströmenden heißen Mediums aufzunehmen und zu speichern und bei nachfolgendem Durchfluss eines kälteren Mediums die gespeicherte Wärme an dieses abzugeben. Hierdurch ist zusätzlich zum Temperiergerät eine zweite Wärmequelle geschaffen, welche während eines Abkühlprozesses aufgeheizt werden kann. Während des nachfolgenden Heizprozesses kann die Wärme wieder ab-gegeben werden, wodurch die Aufheizzeit des Wassers verkürzt ist.

In Ausgestaltung der Erfindung ist das Überstrom- oder Drosselventil umgehend eine Bypassleitung in den Rücklauf des Kühlkreislaufs angeordnet, in der ein Absperrventil angeordnet ist. Hierdurch kann während der Kühlphase kurzfristig ein hoher Volumenstrom erzielt werden, wodurch die Kühlleistung deutlich erhöht ist. Rechtzeitig vor dem Wechsel in die Heizphase kann das Absperrventil wieder geschlossen und über das Überströmventil der erforderliche Systemdruck wiederhergestellt werden. Die Funktionalität einer solchen Bypassleitung kann alternativ, wenn auch mit signifikant schlechtem Wirkungsgrad, durch Ersetzung des Überstrom- oder Drosselventils durch ein Magnetventil erzielt werden. Dabei wird - entsprechend der Funktionalität des Bypasses - bei Kühlung das Magnetventil geöffnet, wodurch ein widerstandsfreier Durchfluss des Kühlwassers erzielt wird. In der Heizphase wird das Magnetventil geschlossen, wodurch der erforderliche Druck wieder aufgebaut wird.

In Ausgestaltung der Erfindung ist wenigstens ein Thermosensor angeordnet, der mit einer Prozesssteuerung des Spritzgießwerkzeugs verbunden ist. Hierdurch ist eine temperaturgesteuerte Prozessführung ermöglicht. Zum Erreichen der für den Einspritzvorgang erforderlichen Werkzeugtemperatur kann so der Einspritzvorgang der Kunststoffmasse in die Kavität des Werkzeugs angestoßen werden. Gleichsam kann bei Erreichen der für den Ausstoß des so geformten Spritzgießprodukts erforderlichen Temperatur das Öffnen des Werkzeugs mit anschließendem Ausstoß des Produkts angestoßen werden. Bevorzugt ist ein Thermosensor in dem Spritzgießwerkzeug angeordnet. Alternativ oder zusätzlich kann auch ein Thermosensor im Rücklauf des Heizkreislaufs angeordnet sein.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: die schematische Darstellung einer nicht-erfindungsgemäßen Vorrichtung zur variothermen Temperierung eines Spritzgießwerkzeugs;
- Fig. 2: die schematische Darstellung der Vorrichtung aus Figur 1 in der Aufheizphase;
- Fig. 3: die Darstellung der Vorrichtung aus Figur 1 in der Kühlphase und
- Fig. 4: die Darstellung der Vorrichtung aus Figur 1 mit zusätzlich angeordneter Kopplung.

Die als Ausführungsbeispiel gewählte Vorrichtung umfasst im Wesentlichen einen Heizkreislauf 1 sowie einen mit diesem verbundenen Kühlkreislauf 2, welche durch ein Spritzgießwerkzeug 3 geführt sind. Das Spritzgießwerkzeug 3 ist in den Figuren nur schematisch dargestellt, die den Vorlauf 31 und den Rücklauf 32 verbindenden, innerhalb des Spritzgießwerkzeugs 3 geführten Heiz- bzw. Kühlkanäle sind nicht gezeigt.

Der Heizkreislauf 1 umfasst ein Temperiergerät 11, dessen Vorlauf 12 und Rücklauf 13 mit dem Spritzgießwerkzeug 3 verbunden sind. Zur bedarfsweisen Regulierung des in dem Innenbehälters des Temperiergeräts 1 befindlichen Wasservolumens ist das Temperiergerät 11 über Versorgungsleitungen 7 mit dem Zulauf 21 des Kühlkreislaufs 2 bzw. dem Ablauf 42 des Wassernetzes 4 verbunden (in den Figuren gestrichelt dargestellt). Das Temperiergerät 1 ist in allgemein bekannter Art und Weise ausgebildet und umfasst im Wesentlichen einen Innenbehälteraufnahme eines Wasserreservoirs, eine Pumpe sowie eine Heizung. In dem Rücklauf 12 sind im Ausführungsbeispiel ein Heizgerät (Booster) 14 und ein Wärmekondensator 15 hintereinander angeordnet. Zwischen Wärmekondensator 15 und Spritzgießwerkzeug 3 ist der Vorlauf 12 mit dem Rücklauf 13 über eine Mehrwegeventilanordnung 16 verbunden.

Der Kühlkreislauf 2 ist direkt mit dem Zulauf 41 und dem Ablauf 42 eines Wassernetzes verbunden. Im Zulauf 21 des Kühlkreislaufs 2 ist eine Druckpumpe 23 angeordnet, welche zusammen mit dem im Rücklauf 22 des Kühlkreislaufs 2 angeordneten Überströmventil 24 den erforderlichen Betriebsdruck gewährleistet. Das Überströmventil 24 umgehend ist eine Bypassleitung 6 in dem Rücklauf 22 des Kühlkreislaufs 2 angeordnet, die ein Absperrventil 61 aufweist. Der Druckpumpe 23 sowie der Bypassleitung 6 nachgeschaltet sind Zulauf 21 und Rücklauf 22 des Kühlkreislaufs 2 über eine Mehrwegeventilanordnung 25 miteinander verbunden. Alternativ kann an Stelle des Überströmventils auch ein Drosselventil angeordnet sein. Für den Fall, dass - aus welchen Gründen auch immer - eine Bypassleitung vermieden werden soll, kann die Bypassfunktionalität - wenn auch mit signifikant schlechtem Wirkungsgrad - auch dadurch erzielt werden, dass das Überströmventil durch ein Magnetventil ersetzt wird. Diese Lösung ist jedoch nicht zu bevorzugen.

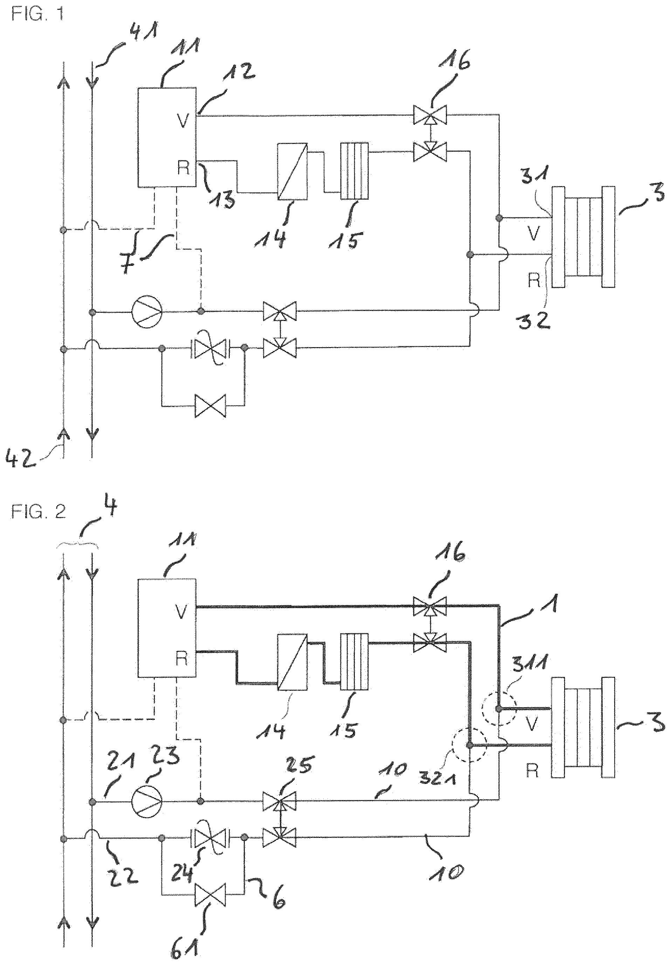

In Figur 2 ist die erfindungsgemäße Vorrichtung während der Heizphase des Spritzgießwerkzeugs 3 gezeigt. Hierbei ist die Mehrwegeventilanordnung 16 derart eingestellt, dass die Zulaufleitung 12 sowie die Rücklaufleitung 13 des Heizkreislaufs 1 durchgängig sind; die beiden Leitungen sind nicht miteinander verbunden. Die Mehrwegeventilanordnung 25 des Kühlkreislaufs 2 ist derart geschaltet, dass der Zulauf 21 sowie der Rücklauf 22 des Kühlkreislaufs 2 verbunden und jeweils wassernetzseitig gesperrt sind. Der hierdurch bewirkte Heizkreislauf 1 ist in Figur 2 mit fett ausgebildeten Linien dargestellt. Dabei spielen die T-Stücke 311, 321 über das Spritzgießwerkzeug 3 mit den Heiz- bzw. Kühlkreisläufen 1, 2 verbunden sind, eine besondere Rolle. Während der in Figur 2 fett hervorgehobene Heizkreislauf 1 zirkuliert, bildet sich in dem dünn dargestellten Abzweigungen der T-Stücke 311, 321 eine stehende Wassersäule 10 aus. Eine Vermischung des heißen Wassers des Heizkreislaufs 1 mit kaltem Wasser findet nicht statt.

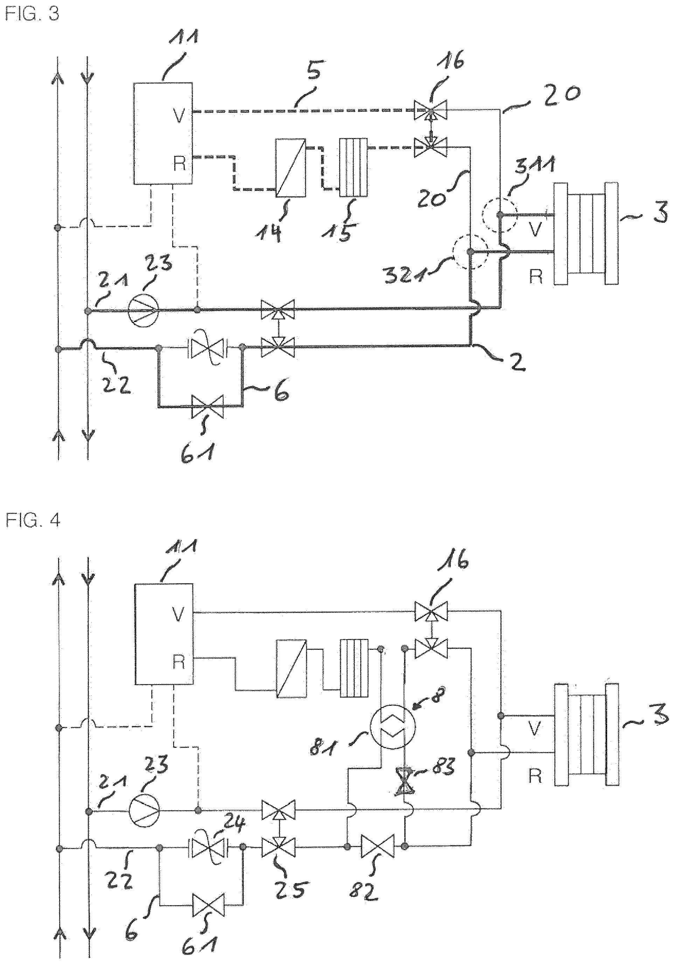

In Figur 3 ist die erfindungsgemäße Vorrichtung in der Kühlphase gezeigt. Hierbei ist die Mehrwegeventilanordnung 16 des Heizkreislaufs 1 derart geschaltet, dass Vorlauf 12 und Rücklauf 13 miteinander unter Abkopplung gegenüber dem Temperiergerät 11 miteinander verbunden sind. Die Mehrwegeventilanordnung 25 des Kühlkreislaufs 2 ist derart geschaltet, dass Zulauf 21 und Rücklauf 22 durchgängig und voneinander getrennt verlaufen. Der so hergestellte Kühlkreislauf ist in Figur 3 durch fette Linienführung dargestellt. Wiederum bildet sich in den dünn dargestellten Abzweigungen der T-Stücke 311, 321 eine stehende Wassersäule 20 aus. Eine Vermischung des heißen Wassers dieser stehenden Wassersäule mit dem fett dargestellten Kühlkreislauf 2 findet nicht statt. Dabei ist das Absperrventil 61 der Bypassleitung 6 geöffnet, wodurch ein erhöhter Volumenstrom und damit eine erhöhte Kühlleistung erzielt ist. Rechtzeitig vor Einsetzen der Heizphase wird dieses Absperrventil geschlossen, wodurch über die Druckpumpe 23 in Verbindung mit dem Überströmventil 24 der erforderliche Druck vor dem Umschalten in die Heizphase wieder aufgebaut wird.

In der erfindungsgemäßen Vorrichtung gemäß Figur 4 ist zusätzlich zwischen dem Rücklauf 22 des Kühlkreislaufs und dem Rücklauf 13 des Heizkreislauf eine einen Wärmetauscher 81 aufweisende Kopplung 8 vorgesehen, welche ein in dem Rücklauf 22 des Kühlkreislaufs 2 angeordnetes Absperrventil 82 umfasst. Bei geschlossenem Absperrventil 82 durchströmt das durch das aufgeheizte Spritzgießwerkzeug 3 erwärmte Wasser den Wärmetauscher 81, der in dem Standby-Kreislauf 5 eine zusätzliche Wassererwärmung bewirkt. Durch das in der Kopplung 8 angeordnete weitere Absperrventil 83 wird bei Unterschreiten einer Grenztemperatur ein unabsichtliches Kühlen des Heizkreislaufs vermieden.

## Patentansprüche

1. Vorrichtung zur variothermen Temperierung eines Spritzgießwerkzeugs (3), umfassend einen Heizkreislauf (1) und einen Kühlkreislauf (2), die durch das Spritzgießwerkzeug (3) geführt sind, wobei der Heizkreislauf (1) mit einem Temperiergerät (11) verbunden ist, wobei der Kühlkreislauf (2) und Heizkreislauf (1) miteinander verbunden sind, wobei in dem Kühlkreislauf (2) und in dem Heizkreislauf (1) jeweils ein den Vorlauf (12, 21) und den Rücklauf (13, 22) verbindendes Mehrwegeventil (16, 25) angeordnet ist und wobei der Kühlkreislauf (2) direkt mit dem Wassernetz (4) verbunden ist, wobei in dessen Zulauf (21) eine Druckpumpe (23) und in dessen Rücklauf (22) ein Überströmventil (24) oder ein Drosselventil angeordnet ist, **dadurch gekennzeichnet dass** der Rücklauf (22) des Kühlkreislaufs über eine ein Absperrventil (82) aufweisende Kopplung (8) mit dem Rücklauf (13) des Heizkreislaufs (1) verbunden ist, in der ein Wärmetauscher (81) angeordnet ist.

2. Vorrichtung nach Anspruch 1, **dadurch gekennzeichnet, dass** im Rücklauf (13) des Heizkreislaufs (1) ein Wärmekondensator (15) angeordnet ist.

3. Vorrichtung nach einem der vorgenannten Ansprüche, **dadurch gekennzeichnet, dass** das Überströmventil (24) bzw. das Drosselventil umgehend eine Bypassleitung (6) in dem Rücklauf (22) des Kühlkreislaufs (2) angeordnet ist, in der ein Absperrventil (61) angeordnet ist.

4. Vorrichtung nach einem der vorgenannten Ansprüche, **dadurch gekennzeichnet, dass** wenigstens ein Thermosensor angeordnet ist, der mit einer Prozesssteuerung des Spritzgießwerkzeugs (3) verbunden ist.

5. Vorrichtung nach Anspruch 4, **dadurch gekennzeichnet, dass** ein Thermosensor in dem Spritzgießwerkzeug (3) angeordnet ist.

6. Vorrichtung nach Anspruch 4 oder 5, **dadurch gekennzeichnet, dass** ein Thermosensor (3) im Rücklauf (12) des Heizkreislaufs (1) angeordnet ist.

## Claims

1. Device for the variothermal tempering of an injection moulding tool (3), having a heating circuit (1) and a cooling circuit (2) that are conducted through the injection moulding tool (3), where the heating circuit (1) is connected to a tempering unit (11), where the cooling circuit (2) and heating circuit (1) are connected to each other, where a multi-way valve (16, 25) connecting the feed line (12, 21) and the return line (13, 22) is arranged in each of the cooling circuit (2) and in the heating circuit (1) and where the cooling circuit (2) is connected direct to the main water supply (4), where a compression pump (23) is arranged in the feed line (21) and an overflow valve (24) or a flow restrictor valve in the return line (22) of the cooling circuit (2), **characterised in that** the return line (22) of the cooling circuit is connected to the return line (13) of the heating circuit (1) by way of a coupling (8) incorporating a non-return valve (82) and having a heat exchanger (81) arranged in it.

2. Device in accordance with claim 1, **characterised in that** a heat condenser (15) is arranged in the return line (13) of the heating circuit (1).

3. Device in accordance with any one of the foregoing claims, **characterised in that** a bypass line (6), which bypasses the overflow valve (24) or the flow restrictor valve, is arranged in the return line (22) of the cooling circuit (2) and has a non-return valve (61) arranged in it.

4. Device in accordance with any one of the foregoing claims, **characterised in that** one or more thermo-sensors that is or are connected to a process control system of the injection moulding tool (3) is or are provided.

5. Device in accordance with claim 4, **characterised in that** a thermo-sensor is arranged in the injection moulding tool (3).

6. Device in accordance with claim 4 or 5, **characterised in that** a thermo-sensor is arranged in the return line (12) of the heating circuit (1).

## Revendications

1. Dispositif destiné à la régulation de température variothermique d'un outil de moulage par injection (3), comprenant un circuit de chauffage (1) et un circuit de refroidissement (2) qui traversent l'outil de moulage par injection (3), sachant que le circuit de chauffage (1) est relié à un appareil de régulation de température (11), sachant que le circuit de refroidissement (2) et le circuit de chauffage (1) sont reliés entre eux, sachant que dans le circuit de refroidissement (2) et dans le circuit de chauffage (1) est disposée respectivement une vanne multivoies (16, 25) reliant le circuit aller (12, 21) et le circuit retour (13, 22), et sachant que le circuit de refroidissement (2) est directement relié au réseau d'eau (4), sachant que dans son circuit d'amenée (21) est disposée une pompe refoulante (23) et dans son circuit retour (22) est disposé un limiteur de débit (24) ou une vanne papillon, **caractérisé en ce que** le circuit retour (22) du circuit de refroidissement est relié, via un accouplement (8) présentant une vanne d'arrêt (82), au circuit retour (13) du circuit de chauffage (1), accouplement dans lequel est disposé un échangeur thermique (81).

2. Dispositif selon la revendication 1, **caractérisé en ce que** dans le circuit retour (13) du circuit de chauffage (1) est disposé un condenseur thermique (15).

3. Dispositif selon l'une des revendications précédentes, **caractérisé en ce qu'**une conduite de bypass (6) est disposée dans le circuit retour (22) du circuit de refroidissement (2) pour contourner le limiteur de débit (24) et/ou la vanne papillon, conduite de bypass dans laquelle est disposée une vanne d'arrêt (61).

4. Dispositif selon l'une des revendications précédentes, **caractérisé en ce qu'**est disposé au moins un capteur thermique relié à une commande processuelle de l'outil de moulage par injection (3).

5. Dispositif selon la revendication 4, **caractérisé en ce qu'**un capteur thermique est agencé dans l'outil de moulage par injection (3).

6. Dispositif selon la revendication 4 ou 5, **caractérisé en ce qu'**un capteur thermique est disposé dans le circuit retour (12) du circuit de chauffage (1).
